(19) **Europäisches Patentamt**

**European Patent Office**

**Office européen des brevets**

(11) **EP 1 274 105 B1**

(12) **FASCICULE DE BREVET EUROPEEN**

(45) Date de publication et mention
de la délivrance du brevet:
**05.10.2005 Bulletin 2005/40**

(51) Int Cl.$^7$: **H01G 9/00**, H02H 7/16

(21) Numéro de dépôt: **02291430.3**

(22) Date de dépôt: **10.06.2002**

(54) **Procédé et dispositif d'équilibrage de supercapacité**

Verfahren und Vorrichtung zum Ausbalancieren von Superkapazitäten

Supercapacity balancing procedure and system

(84) Etats contractants désignés:
**DE FR GB**

(30) Priorité: **18.06.2001 FR 0107959**
**16.05.2002 FR 0206037**

(43) Date de publication de la demande:
**08.01.2003 Bulletin 2003/02**

(73) Titulaire: **Saft Finance S.à.r.l.**
**1471 Luxembourg (LU)**

(72) Inventeurs:
• **Desprez, Philippe**
**33290 Blanquefort (FR)**
• **Barrailh, Gérard**
**33170 Gradignan (FR)**
• **Lavour, Pascal**
**33300 Bordeaux (FR)**
• **Raél, Stéphane**
**5400 Nancy (FR)**
• **Sharif, Fadi**
**54550 Maizières (FR)**

• **Davat, Bernard**
**54000 Nancy (FR)**

(74) Mandataire: **Pochart, François et al**
**Hirsch & Associés**
**58, Avenue Marceau**
**75008 Paris (FR)**

(56) Documents cités:
**EP-A- 0 851 445**      **US-A- 5 063 340**
**US-A- 5 528 121**      **US-A- 5 545 933**
**US-A- 5 726 552**

• **BONERT R ET AL: "SUPER-CAPACITORS FOR PEAK LOAD SHAVING OF BATTERIES" EPE '97. 7TH. EUROPEAN CONFERENCE ON POWER ELECTRONICS AND APPLICATIONS. TRONDHEIM, SEPT. 8 - 10, 1997, EPE. EUROPEAN CONFERENCE ON POWER ELECTRONICS AND APPLICATIONS, BRUSSELS, EPE ASSOCIATION, B, vol. 1 CONF. 7, 8 septembre 1997 (1997-09-08), pages 1055-1060, XP000769079 ISBN: 90-75815-02-6**

**Description**

La présente invention concerne un procédé et un système de charge d'au moins une supercapacité, c'est-à-dire d'une ou de plusieurs supercapacités, plus particulièrement adaptés à l'équilibrage des supercapacités.

Les supercapacités sont des dispositifs connus et en cours de développement à l'heure actuelle comme sources d'énergie dans les applications de forte puissance telles que notamment le démarrage de moteurs, l'appoint de puissance des moteurs de véhicules hybrides, les alimentations sans interruption. Dans ce type d'applications, il est nécessaire de disposer de sources d'énergie susceptibles de se recharger rapidement et de réaliser de très nombreux cycles, ce qui est le cas des supercapacités contrairement aux batteries traditionnelles.

Les supercapacités sont capables de délivrer des puissances spécifiques très importantes sur des durées courtes. En effet, la durée de décharge (ou de charge) caractéristique d'une supercapacité est de l'ordre de quelques secondes à quelques dizaines de secondes, durée pendant laquelle des puissances spécifiques supérieures au kW/kg peuvent être délivrées. Les supercapacités ont individuellement des capacités ayant des valeurs allant du Farad à environ 3500 F, et des résistances très faibles, inférieures au mΩ pour les éléments de plus forte capacité.

Lors de la charge de ces supercapacités, il est important de ne pas dépasser une tension maximale aux bornes de la supercapacité. Ainsi, il est connu de contrôler la charge d'une supercapacité de manière à l'arrêter lorsque la tension à ses bornes atteint une valeur prédéterminée. En effet, lorsque la tension dépasse cette valeur prédéterminée, le vieillissement de la supercapacité se trouve accéléré, ce qui en réduit l'autonomie et la puissance.

Par ailleurs, on utilise en général plusieurs supercapacités connectées en série pour former un module de supercapacités. Les applications mentionnées ci-dessus requièrent généralement des tensions supérieures à quelques dizaines de volts, voire quelques centaines de volts. Dans ce cas, en fin de charge du module de supercapacités, on observe une dispersion des caractéristiques des supercapacités les unes par rapport aux autres, notamment pour ce qui est de la tension aux bornes des supercapacités. Ceci est dû à une dispersion des propriétés intrinsèques (résistance série et capacité) de chacune des supercapacités au sein du module, au vieillissement des supercapacités et à un éventuel gradient de température au sein du module, dû à son environnement. Ceci conduit à des courants de fuite différents pour chacune des supercapacités du module et donc à des tensions en fin de charge différentes pour chacune des supercapacités.

Ce problème nuit au bon fonctionnement du module de supercapacités. En effet, il se peut que certaines des supercapacités du module atteignent des tensions supérieures à leur tension nominale de charge, ce qui détériore leurs caractéristiques et entraîne leur vieillissement prématuré. Ainsi, le module dans son ensemble ne peut fonctionner correctement.

Pour résoudre ce problème, le document EP-0 564 149 propose de connecter en parallèle aux bornes de chaque supercapacité d'un module de plusieurs supercapacités, un circuit de dérivation, dit circuit by-pass, comprenant un transistor MOS qui va commuter à partir d'une tension prédéfinie aux bornes de la supercapacité et dériver un courant à une intensité, dite intensité nominale de dérivation.

Toutefois, sa mise en oeuvre pose certaines difficultés. Ainsi, ce type de circuit de dérivation implique l'utilisation d'une intensité de charge égale à l'intensité nominale de dérivation en fin de charge. En effet, si on continue la charge d'une supercapacité à une intensité beaucoup plus élevée que l'intensité nominale de dérivation, la supercapacité risque une surcharge entraînant une diminution de sa durée de vie. En conséquence, l'utilisation d'une faible intensité de charge égale à l'intensité nominale de dérivation va très largement augmenter le temps de fin de charge.

La présente invention vise à fournir un procédé de charge de supercapacité permettant de continuer la charge de la supercapacité à une intensité plus élevée que l'intensité nominale de dérivation lorsque le circuit de dérivation a commencé à dériver le courant et de diminuer ainsi le temps de fin de charge.

Dans toute la suite, on parle de charge et d'équilibrage aussi bien pour une supercapacité seule (il s'agit plus dans ce cas d'un contrôle de la tension de charge de la supercapacité) que pour un module de supercapacités.

La présente invention propose à cet effet un procédé de charge d'au moins une supercapacité comprenant une étape de dérivation de l'intensité circulant dans ladite supercapacité telle que lorsque la tension aux bornes de ladite supercapacité atteint une valeur prédéterminée, dite tension de seuil, l'intensité de dérivation prend une valeur maximale dite intensité nominale de dérivation, ledit procédé étant caractérisé en ce qu'il comprend une étape de contrôle de l'intensité de charge de ladite supercapacité en fonction de la tension aux bornes de la supercapacité par une fonction logique de détection de tension, dite fonction d'optimisation, susceptible de passer d'un état dit activé à un état dit désactivé lorsque la tension aux bornes de ladite supercapacité dépasse une première tension prédéfinie supérieure à la tension de seuil puis de repasser à l'état activé lorsque la tension aux bornes de ladite supercapacité devient inférieure à une deuxième tension prédéfinie inférieure ou égale à ladite première tension prédéfinie.

Grâce à l'invention, on peut continuer à charger la supercapacité à une intensité supérieure à l'intensité nominale de dérivation lorsque la dérivation a eu lieu et contrôler l'intensité de charge en fonction de la tension aux bornes de la supercapacité sans risque de dépassement d'une tension prédéfinie pouvant entraîner une diminution de durée de vie. Le procédé selon l'invention permet donc d'optimiser le temps de charge sans détériorer la supercapacité.

Avantageusement, le signal délivré par ladite fonction d'optimisation est un signal sous forme d'hystérésis.

Selon un mode de réalisation, le procédé comporte une étape de charge de ladite supercapacité avec une intensité de charge supérieure à ladite intensité nominale de dérivation et un maintien de cette étape de charge tant que ladite fonction d'optimisation est à l'état activé.

De manière avantageuse, lorsque la tension aux bornes de ladite supercapacité revient à une valeur de tension, dite tension de référence, qui est inférieure à la valeur de la tension de seuil, l'intensité de dérivation prend une valeur très inférieure à l'intensité du courant de fuite de ladite supercapacité.

Selon une variante, la caractéristique du courant de dérivation en fonction de la tension aux bornes de la supercapacité est un signal sous forme d'hystérésis.

La caractéristique tout ou rien du courant de dérivation en fonction de la tension aux bornes de la supercapacité a donc une forme d'hystérésis et permet d'améliorer la stabilité en cas de variation de la tension de la supercapacité due, par exemple, à une variation brusque du courant de charge.

Selon un mode de réalisation, le procédé comporte une étape de filtrage des harmoniques hautes fréquences de la tension aux bornes de la supercapacité.

Ainsi, l'utilisation d'un filtre passe-bas permet de filtrer des harmoniques hautes fréquences de la tension aux bornes de la supercapacité induites par un découpage haute fréquence du courant de charge.

Selon un mode de réalisation, le procédé comporte une étape de réinitialisation du chargeur en fonction de la tension aux bornes de la supercapacité par une fonction logique de détection de tension, dite fonction de réinitialisation, susceptible de passer d'un état dit activé à un état dit désactivé lorsque la tension aux bornes de ladite supercapacité dépasse une troisième tension prédéfinie inférieure ou égale à ladite première tension prédéfinie puis de repasser à l'état dit activé lorsque ladite tension aux bornes de ladite supercapacité devient inférieure à une quatrième tension prédéfinie inférieure à ladite deuxième tension prédéfinie.

Avantageusement, le procédé comporte une étape de détection de tension minimale de sécurité aux bornes de la supercapacité par une fonction logique de détection de tension, dite fonction de détection de tension minimale, susceptible de passer d'un état dit activé à un état dit désactivé lorsque la tension aux bornes de ladite supercapacité dépasse une cinquième tension prédéfinie puis de repasser à l'état dit activé lorsque ladite tension aux bornes de ladite supercapacité devient inférieure à une sixième tension prédéfinie.

Ainsi, lorsque la tension aux bornes de la supercapacité devient très faible (cas d'une décharge), la fonction de détection permet de diminuer l'intensité de décharge.

Avantageusement, le procédé de charge comporte une étape de charge d'une pluralité de supercapacités caractérisé en ce que ladite fonction d'optimisation passe d'un état dit activé à un état dit désactivé lorsque l'une au moins des tensions aux bornes desdites supercapacités dépasse ladite première tension prédéfinie et repasse à l'état activé lorsque chacune des tensions aux bornes desdites supercapacités devient inférieure à ladite deuxième tension prédéfinie.

De manière avantageuse, le procédé de charge comportant une étape de charge d'une pluralité de supercapacités est caractérisé en ce que ladite fonction de réinitialisation passe d'un état dit activé à un état dit désactivé lorsque l'une au moins des tensions aux bornes desdites supercapacités dépasse ladite troisième tension prédéfinie et repasse à l'état dit activé lorsque chacune des tensions aux bornes desdites supercapacités devient inférieure à ladite quatrième tension prédéfinie.

Avantageusement, le procédé de charge comportant une étape de charge d'une pluralité de supercapacités est caractérisé en ce que ladite fonction de détection de tension minimale passe d'un état dit activé à un état dit désactivé lorsque chacune des tensions aux bornes desdites supercapacités dépasse ladite cinquième tension prédéfinie et repasse à l'état dit activé lorsque l'une au moins des tensions aux bornes desdites supercapacités devient inférieure à ladite sixième tension prédéfinie.

Avantageusement, le procédé de charge comportant une étape de charge d'une pluralité de supercapacités comporte une étape de détection de dispersion de la tension aux bornes desdites supercapacités par une fonction logique de détection de tension, dite fonction de détection de dispersion, caractérisé en ce que ladite fonction de détection de dispersion passe d'un état dit activé à un état dit désactivé lorsque chacune des tensions aux bornes desdites supercapacités dépasse une septième tension prédéfinie et repasse à l'état dit activé lorsque l'une au moins des tensions aux bornes desdites supercapacités devient inférieure à une huitième tension prédéfinie.

La combinaison de la fonction d'optimisation de fin de charge et de cette fonction de détection de dispersion permet de détecter un déséquilibre important des tensions aux bornes des supercapacités dans un module de supercapacités.

Enfin, la présente invention a également pour objet un système pour la mise en oeuvre du procédé précédent caractérisé en ce qu'il comprend :

- au moins une supercapacité

- un circuit de dérivation comprenant un transistor fonctionnant en commutation et monté en parallèle aux bornes de ladite supercapacité,
- des moyens de charge,
- un organe de détection délivrant au moins un signal logique représentatif de la tension aux bornes de ladite supercapacité, ledit signal logique étant fourni aux dits moyens de charge.

De manière avantageuse, le système comporte un filtre passe bas monté en parallèle aux bornes de ladite supercapacité.

Selon un premier mode de réalisation, le système comprend une pluralité de supercapacités montées en série, un circuit de dérivation étant monté en parallèle aux bornes de chacune desdites supercapacités.

Selon un deuxième mode de réalisation, le système comporte une pluralité de supercapacités montées en série, un circuit de dérivation unique étant monté en parallèle aux bornes de l'ensemble desdites supercapacités.

Selon un troisième mode de réalisation, le système comporte une pluralité de supercapacités montées en parallèle, un circuit de dérivation unique étant monté en parallèle aux bornes de l'ensemble desdites supercapacités.

D'autres caractéristiques et avantages de la présente invention apparaîtront dans la description suivante d'un mode de réalisation de l'invention, donné à titre illustratif et nullement limitatif.

Dans les figures suivantes :

- La figure 1 représente le schéma de principe d'un système de charge pour la mise en oeuvre du procédé selon l'invention sur une supercapacité élémentaire,
- La figure 2 représente le schéma de principe d'un système de charge pour la mise en oeuvre du procédé selon l'invention sur un module de plusieurs supercapacités,
- La figure 3 montre un exemple de courbe caractéristique de l'intensité de dérivation et de la fonction d'optimisation selon le procédé de l'invention en fonction de la tension aux bornes de la supercapacité,
- La figure 4 montre un exemple de courbe représentant la tension aux bornes d'un module de supercapacités, l'intensité de charge d'un module de supercapacités, la tension aux bornes d'une des supercapacités du module, l'intensité de dérivation et la fonction d'optimisation en fonction du temps de charge utilisant un procédé selon l'invention.

Dans toutes ces figures, les éléments communs portent les mêmes numéros de référence.

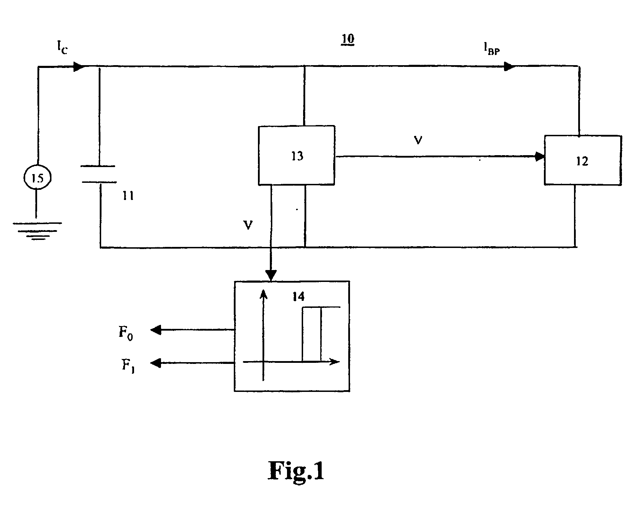

On voit en figure 1 un système de charge 10 selon l'invention comprenant une supercapacité 11 aux bornes de laquelle est monté en parallèle un circuit 12 dit de dérivation dans lequel circule un courant de dérivation $I_{BP}$, le circuit 12 comprenant un transistor MOS de puissance fonctionnant en commutation. Un filtre passe-bas 13 est monté en parallèle aux bornes de la supercapacité 11. Ce filtre passe-bas 13 est rendu nécessaire en cas de découpage haute fréquence du courant de charge $I_C$ générant des harmoniques de tension préjudiciables au bon fonctionnement du circuit de dérivation 12. Enfin, un organe de détection 14 relié au filtre 13 génère deux fonctions logiques de gestion de charge $F_0$ et $F_1$, dites respectivement fonction d'optimisation et fonction de réinitialisation, dont l'interprétation par le chargeur 15 de la supercapacité 11 permet notamment d'optimiser le temps de charge sans détériorer la supercapacité et de réinitialiser le chargeur. Le filtre 13 génère une tension V filtrée représentative de la tension aux bornes de la supercapacité 11 sans harmoniques de tension. La tension V contrôle le circuit 12 et l'organe 14.

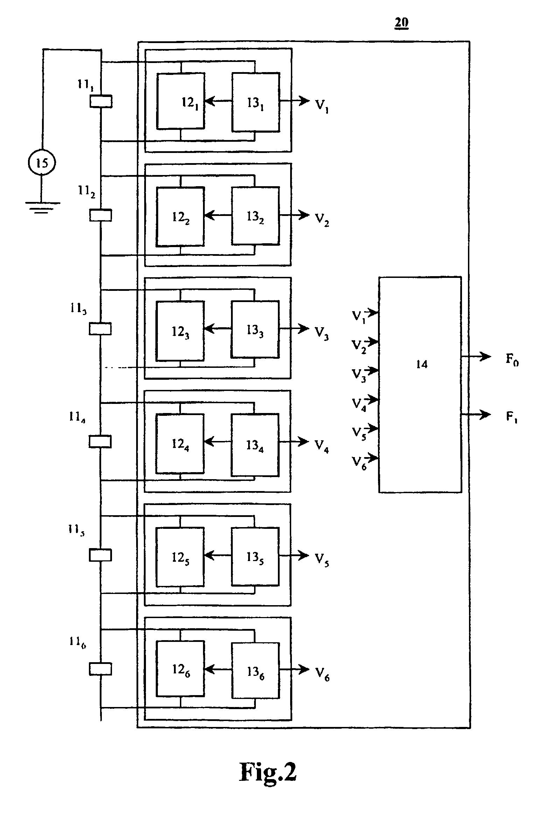

La figure 2 montre un système 20 de charge d'un module de supercapacités comprenant une pluralité (6 dans l'exemple de la figure 2) de circuits $10_1$ à $10_6$ tel que celui de la figure 1. Chaque élément d'un circuit $10_n$ (n variant de 1 à 6 dans l'exemple de la figure 2) comprend les mêmes éléments que le circuit 10 de la figure 1, référencés avec le même numéro portant l'indice correspondant au rang de ce circuit dans le module 20. Le chargeur 15 et l'organe de détection 14 sont communs à toutes les supercapacités $11_1$ à $11_6$.

Selon l'invention, les tensions de sortie $V_i$ de chaque circuit 10, sont combinées dans l'organe de détection 14 pour générer les fonctions logiques $F_0$ et $F_1$, les deux fonctions logiques étant envoyées au chargeur 15.

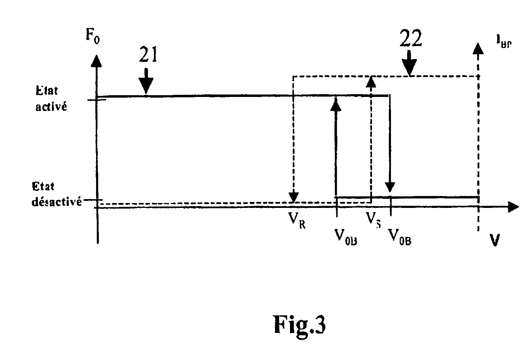

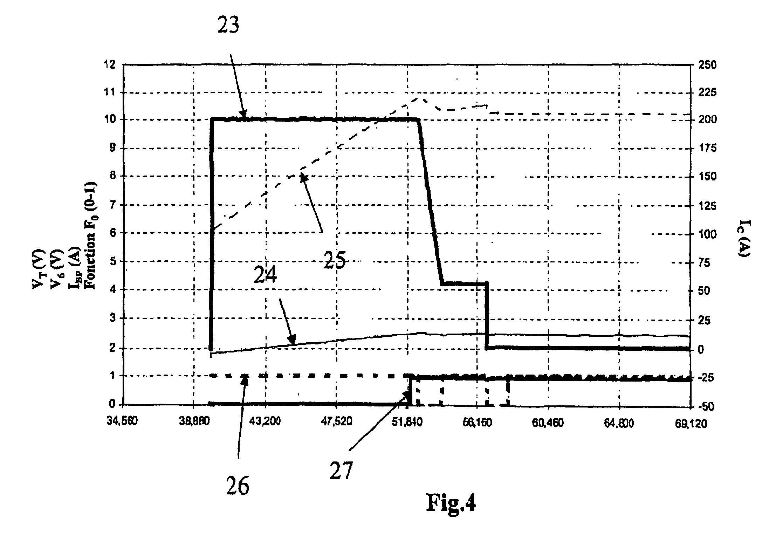

On va maintenant expliquer le fonctionnement du circuit de dérivation 12 (ou $12_1$ à $12_6$) lors d'un procédé de charge selon l'invention, en relation avec les figures 3 et 4.

La figure 3 montre un exemple de courbe caractéristique de l'intensité de dérivation, notée $I_{BP}$, et de la fonction d'optimisation $F_0$ selon le procédé de l'invention en fonction de la tension V aux bornes de la supercapacité.

La courbe 21 en trait plein représente la fonction d'optimisation $F_0$ en fonction de la tension V aux bornes de la supercapacité.

La courbe 22 en trait pointillé représente l'intensité de dérivation $I_{BP}$ en fonction de la tension V aux bornes de la supercapacité.

On distingue les régions suivantes concernant la caractéristique en forme d'hystérésis de l'intensité de dérivation en fonction de la tension V :

- Tant que la tension V est inférieure à une tension $V_S$, dite tension de seuil, le courant de dérivation $I_{BP}$ a une intensité très inférieure au courant de fuite de la supercapacité 11.

- Dès que la tension V atteint la tension $V_S$, le transistor du circuit de dérivation 12 commute et le courant de dérivation $I_{BP}$ prend une valeur déterminée de l'ordre de quelques centaines de milliampères à quelques ampères.
- Quand la tension V rediminue et redevient inférieure à une tension $V_R$, dite tension de référence, l'intensité de dérivation redevient inférieure à l'intensité du courant de fuite de la supercapacité 11.

On distingue les régions suivantes concernant la caractéristique en forme d'hystérésis de la fonction logique $F_0$ délivrée par l'organe de détection 14 en fonction de la tension V :

- Tant que la tension V est inférieure à une première tension prédéfinie, notée $V_{OH}$, $F_0$ est à l'état activé, c'est à dire que $F_0$ a une valeur de tension égale à quelques volts correspondant au 1 de la logique binaire. $V_{OH}$ est une tension supérieure à la tension de seuil $V_S$.
- Dès que V atteint $V_{OH}$, $F_0$ prend une valeur quasi nulle et passe donc à un état désactivé correspondant au 0 de la logique binaire.
- Quand V rediminue et redevient inférieure à une deuxième tension prédéfinie, notée $V_{OB}$, $F_0$ repasse à l'état activé correspondant au 1 de la logique binaire.

La figure 3 a été décrite ci dessus en référence avec la figure 1. Dans le cas d'une pluralité de supercapacités $11_1$ à $11_6$ telle que décrit en référence avec la figure 2, la fonction d'optimisation $F_0$ passe d'un état activé à un état désactivé lorsque l'une au moins des tensions aux bornes des supercapacités dépasse la première tension prédéfinie $V_{OH}$ et repasse à l'état activé lorsque chacune des tensions $V_1$ à $V_6$ aux bornes desdites supercapacités devient inférieure à ladite deuxième tension prédéfinie $V_{OB}$.

La figure 4 montre un exemple de courbe représentant la tension $V_T$ aux bornes d'un module de six supercapacités tel que représenté en figure 2, l'intensité $I_C$ de charge du module de supercapacités, la tension $V_6$ aux bornes de la supercapacité $11_6$, l'intensité de dérivation $I_{BP}$ correspondant au circuit $10_6$ et la fonction d'optimisation $F_0$ en fonction du temps de charge utilisant un procédé selon l'invention.

La courbe 25 en trait pointillé représente la tension $V_T$ aux bornes du module de supercapacités en fonction du temps de charge.

La courbe 23 en trait plein épais représente l'intensité $I_C$ de charge du module de supercapacités en fonction du temps de charge.

La courbe 24 en trait plein représente la tension $V_6$ aux bornes de la supercapacité $11_6$ en fonction du temps de charge.

La courbe 27 en trait plein représente l'intensité de dérivation $I_{BP}$ correspondant au circuit $10_6$ en fonction du temps de charge.

La courbe 26 en trait pointillé épais représente la fonction d'optimisation $F_0$ en fonction du temps de charge.

Les tensions prédéfinies ont été choisies comme suit :

$$V_S = 2,5 \text{ V}$$

$$V_R = 2,48 \text{ V}$$

$$V_{OB} = 2,5 \text{ V}$$

$$V_{OH} = 2,53 \text{ V}.$$

La charge est effectuée en plusieurs phases:

#### Phase 1 :

Le courant de charge $I_C$ est constant et égal à environ 200 A. La supercapacité $11_6$ se charge ce qui implique l'augmentation progressive de la tension $V_6$ et de la tension globale $V_T$. La fonction $F_0$ est dans l'état activé. L'intensité de dérivation est proche de zéro ou en tout cas très inférieure au courant de fuite des supercapacités.

#### Phase 2 :

Lorsque la tension $V_6$ atteint $V_S = 2,5$ V, le circuit $12_6$ commence à dériver le courant et $I_{BP}$ prend une valeur constante, dite intensité nominale de dérivation, égale à 1 A. La fonction $F_0$ étant toujours à l'état activé, elle indique au chargeur 15 qu'il peut maintenir un courant de charge à 200 A.

#### Phase 3 :

Lorsque la tension $V_6$ atteint $V_{OH} = 2,53$ V, $F_0$ passe à l'état désactivé et indique au chargeur 15 que ce dernier doit diminuer l'intensité de charge : le courant de charge passe, en suivant une rampe linéaire de courant, de 200 A à environ 55 A. Dans le même temps, $V_6$ et $V_T$ diminuent jusqu'à ce que $V_6$ repasse sous $V_{OB} = 2,5$ V. $F_0$ repasse alors à l'état activé.

#### Phase 4 :

Les supercapacités se chargent à nouveau à une intensité égale à environ 55 A. Cette phase implique à nouveau une augmentation de $V_6$ et $V_T$. Lorsque la tension $V_6$ atteint à nouveau $V_{OH} = 2,53$ V, $F_0$ repasse à l'état désactivé et indique au chargeur 15 que ce dernier doit diminuer l'intensité de charge qui passe à une valeur proche de zéro.

Le protocole de charge tel que décrit ci dessus permet de continuer à charger la supercapacité à une intensité supérieure à l'intensité nominale de dérivation égale à 1A lorsque la dérivation a eu lieu et de contrôler l'intensité de charge en fonction de la tension aux bornes de la supercapacité grâce à la valeur de la fonction logique $F_0$ qui vient contrôler le chargeur, sans risque de dépassement d'une tension prédéfinie pouvant entraîner une diminution de durée de vie de la supercapacité.

D'autres fonctions logiques non représentées peuvent être utilisées pour venir contrôler le chargeur 15.

Ainsi, en référence à la figure 1, la fonction $F_1$ de réinitialisation du chargeur est susceptible de passer d'un état activé à un état désactivé lorsque la tension V aux bornes de la supercapacité 11 dépasse une troisième tension prédéfinie inférieure ou égale à la première tension prédéfinie $V_{OH}$ puis de repasser à l'état activé lorsque la tension V aux bornes de la supercapacité 11 devient inférieure à une quatrième tension prédéfinie inférieure à ladite deuxième tension prédéfinie $V_{OB}$.

Dans le cas d'une pluralité de supercapacités $11_1$ à $11_6$ telle que décrit en référence avec la figure 2, la fonction d'optimisation $F_1$ passe d'un état activé à un état désactivé lorsque l'une au moins des tensions $V_1$ à $V_6$ aux bornes des supercapacités $11_1$ à $11_6$ dépasse la troisième tension prédéfinie et repasse à l'état activé lorsque chacune des tensions $V_1$ à $V_6$ aux bornes desdites supercapacités $11_1$ à $11_6$ devient inférieure à la quatrième tension prédéfinie.

Bien entendu, les modes de réalisation qui viennent d'être décrits ont été donnés à titre purement illustratif.

Notamment, la caractéristique de l'intensité de charge telle que décrite ci dessus a une partie en forme de rampe de courant mais il est bien évident qu'elle peut être tout à fait différente, par exemple en forme d'escalier utilisant plusieurs niveaux constants de courant en fonction du temps.

De même, on a choisi un transistor MOS pour le circuit de dérivation mais il est entendu que tout type de transistor tel qu'un transistor IGBT fonctionnant en commutation peut être utilisé.

Par ailleurs, tous les exemples de dimensionnement présentés l'ont été pour illustrer le fonctionnement du procédé selon l'invention, et les valeurs qu'ils comportent ne sont absolument pas limitatives.

En outre, l'invention, dans tous ses modes de réalisation, s'applique aussi bien à la charge d'une supercapacité seule qu'à la charge d'un module de plusieurs supercapacités.

Enfin, on pourra remplacer tout moyen par un moyen équivalent sans sortir du cadre de l'invention qui est défini par les revendications.

## Revendications

**1.** Procédé de charge d'au moins une supercapacité (11) comprenant une étape (22) de dérivation de l'intensité circulant dans ladite supercapacité telle que, lorsque la tension (V) aux bornes de ladite supercapacité atteint une valeur prédéterminée, dite tension de seuil $(V_S)$, l'intensité de dérivation $(I_{BP})$ prend une valeur maximale dite intensité nominale de dérivation, ledit procédé étant **caractérisé en ce qu'**il comprend une étape (21) de contrôle de l'intensité de charge $(I_C)$ de ladite supercapacité en fonction de la tension (V) aux bornes de ladite supercapacité par une fonction logique $(F_0)$ de détection de tension, dite fonction d'optimisation, susceptible de passer d'un état dit activé à un état dit désactivé lorsque la tension (V) aux bornes de ladite supercapacité dépasse une première tension prédéfinie $(V_{OH})$ supérieure à la tension de seuil $(V_S)$ puis de repasser à l'état activé lorsque ladite tension (V) aux bornes de ladite supercapacité devient inférieure à une deuxième tension prédéfinie $(V_{OB})$ inférieure ou égale à ladite première tension prédéfinie $(V_{OH})$.

**2.** Procédé de charge selon la revendication 1, dans lequel ledit signal délivré par ladite fonction d'optimisation $(F_0)$ est un signal sous forme d'hystérésis.

**3.** Procédé de charge selon l'une des revendications 1 ou 2, comportant une étape de charge de ladite supercapacité avec une intensité de charge $(I_C)$ supérieure à ladite intensité nominale de dérivation et un maintien de cette étape de charge tant que ladite fonction logique d'optimisation $(F_0)$ est à l'état activé.

**4.** Procédé de charge selon l'une des revendications précédentes, comportant une étape telle que, lorsque la tension (V) aux bornes de ladite supercapacité revient à une valeur de tension, dite tension de référence $(V_R)$, qui est inférieure à la valeur de ladite tension de seuil $(V_S)$, l'intensité de dérivation $(I_{BP})$ prend une valeur très inférieure à une intensité correspondant au courant de fuite de ladite supercapacité.

**5.** Procédé de charge selon la revendication précédente, dans lequel la caractéristique du courant de dérivation en fonction de la tension aux bornes de ladite supercapacité est un signal sous forme d'hystérésis.

**6.** Procédé de charge selon l'une des revendications précédentes, comportant une étape de filtrage des harmoniques hautes fréquences de ladite tension (V) aux bornes de ladite supercapacité.

**7.** Procédé de charge selon l'une des revendications précédentes, comportant une étape de réinitialisation du chargeur (15) en fonction de la tension (V) aux bornes de la supercapacité par une fonction logique de détection de tension, dite fonction de réinitialisation ($F_1$), susceptible de passer d'un état dit activé à un état dit désactivé lorsque la tension (V) aux bornes de ladite supercapacité dépasse une troisième tension prédéfinie inférieure ou égale à ladite première tension prédéfinie ($V_{OH}$) puis de repasser à l'état dit activé lorsque ladite tension (V) aux bornes de ladite supercapacité devient inférieure à une quatrième tension prédéfinie inférieure à ladite deuxième tension prédéfinie ($V_{OB}$).

**8.** Procédé de charge selon l'une des revendications précédentes, comportant une étape de détection de tension minimale de sécurité aux bornes de la supercapacité par une fonction logique de détection de tension, dite fonction de détection de tension minimale, susceptible de passer d'un état dit activé à un état dit désactivé lorsque la tension aux bornes de ladite supercapacité dépasse une cinquième tension prédéfinie puis de repasser à l'état dit activé lorsque ladite tension aux bornes de ladite supercapacité devient inférieure à une sixième tension prédéfinie.

**9.** Procédé de charge selon l'une des revendications précédentes, comportant une étape de charge d'une pluralité de supercapacités ($11_i$), dans lequel ladite fonction d'optimisation ($F_0$) passe d'un état dit activé à un état dit désactivé lorsque l'une au moins des tensions ($V_i$) aux bornes desdites supercapacités dépasse ladite première tension prédéfinie ($V_{OH}$) et repasse à l'état activé lorsque chacune des tensions ($V_i$) aux bornes desdites supercapacités devient inférieure à ladite deuxième tension prédéfinie ($V_{OB}$).

**10.** Procédé de charge selon la revendication 7, dans lequel ladite fonction de réinitialisation ($F_1$) passe d'un état dit activé à un état dit désactivé lorsque l'une au moins des tensions ($V_i$) aux bornes desdites supercapacités dépasse ladite troisième tension prédéfinie et repasse à l'état dit activé lorsque chacune des tensions ($V_i$) aux bornes desdites supercapacités devient inférieure à ladite quatrième tension prédéfinie.

**11.** Procédé de charge selon l'une des revendications 9 ou 10, dans lequel ladite fonction de détection de tension minimale passe d'un état dit activé à un état dit désactivé lorsque chacune des tensions ($V_i$) aux bornes desdites supercapacités dépasse ladite cinquième tension prédéfinie et repasse à l'état dit activé lorsque l'une au moins des tensions ($V_i$) aux bornes desdites supercapacités devient inférieure à ladite sixième tension prédéfinie.

**12.** Procédé de charge selon l'une des revendications 9 à 11, comportant une étape de détection de dispersion de la tension aux bornes desdites supercapacités par une fonction logique de détection de tension, dite fonction de détection de dispersion, dans lequel ladite fonction de détection de dispersion passe d'un état dit activé à un état dit désactivé lorsque chacune des tensions ($V_i$) aux bornes desdites supercapacités dépasse une septième tension prédéfinie et repasse à l'état dit activé lorsque l'une au moins des tensions aux bornes desdites supercapacités devient inférieure à une huitième tension prédéfinie.

**13.** Système (10, 20) pour la mise en oeuvre du procédé selon l'une des revendications précédentes, dans lequel ledit système comprend :

- au moins une supercapacité (11, $11_i$)
- un circuit de dérivation (12, $12_i$) comprenant un transistor fonctionnant en commutation et monté en parallèle aux bornes de ladite supercapacité,
- des moyens de charge (15),
- un organe de détection (14) délivrant au moins un signal logique représentatif de la tension aux bornes de ladite supercapacité, ledit signal logique étant fourni aux dits moyens de charge.

**14.** Système (10, 20) selon la revendication précédente, comprenant un filtre passe bas (13, $13_i$) monté en parallèle aux bornes de ladite supercapacité.

**15.** Système (10, 20) selon l'une des revendications 13 ou 14, comportant une pluralité de supercapacités ($11_i$) montées en série, un circuit de dérivation ($12_i$) étant monté en parallèle aux bornes de chacune desdites supercapacités.

**16.** Système selon l'une des revendications 13 ou 14, comportant une pluralité de supercapacités montées en série, un circuit de dérivation unique étant monté en parallèle aux bornes de l'ensemble desdites supercapacités.

**17.** Système selon l'une des revendications 13 ou 14, comportant une pluralité de supercapacités montées en parallèle, un circuit de dérivation unique étant monté en parallèle aux bornes de l'ensemble desdites supercapacités.

**Patentansprüche**

**1.** Verfahren zum Aufladen von mindestens einem Superkondensator (11), umfassend einen Schritt (22) des Abzweigens des in dem Superkondensator fließenden Stroms derart, daß, wenn die Spannung (V) an den Anschlüssen des Superkondensators einen als Schwellenspannung ($V_S$) bezeichneten, vorbestimmten Wert erreicht, der Abzweigstrom ($I_{BP}$) einen als Nenn-Abzweigstrom bezeichneten Maximalwert annimmt, **dadurch gekennzeichnet, daß** das Verfahren einen Schritt (21) der Steuerung des Ladestroms ($I_C$) des Superkondensators als Funktion der Spannung (V) an den Anschlüssen des Superkondensators mittels einer logischen Funktion ($F_0$) zur Spannungsdetektierung, bezeichnet als Optimierungsfunktion, enthält, geeignet für den Wechsel aus einem sogenannten aktivierten Zustand in einen sogenannten deaktivierten Zustand, wenn die Spannung (V) an den Anschlüssen des Superkondensators eine erste vordefinierte Spannung ($V_{OH}$) übersteigt, die größer ist als die Schwellenspannung ($V_S$), um anschließend in den aktivierten Zustand zurückzukehren, wenn die Spannung an den Anschlüssen des Superkondensators unter eine zweite vordefinierte Spannung ($V_{OB}$) fällt, die kleiner oder gleich der ersten vordefinierten Spannung ($V_{OH}$) ist.

2. Verfahren nach Anspruch 1, bei dem das mit Hilfe der Optimierungsfunktion ($F_0$) gelieferte Signal ein Signal mit Hysterese-Form ist.

3. Verfahren nach Anspruch 1 oder 2, umfassend einen Schritt des Aufladens des Superkondensators mit einem Ladestrom ($I_C$), der größer ist als der Nenn-Abzweigstrom, und des Haltens dieses Aufladeschritts für eine Zeitspanne, in der die logische Optimierungsfunktion ($F_0$) sich im aktivierten Zustand befindet.

4. Verfahren nach einem der vorhergehenden Ansprüche, umfassend einen Schritt, bei dem, wenn die Spannung (V) an den Anschlüssen des Superkondensators einen als Referenzspannung ($V_R$) bezeichneten Spannungswert erreicht, welcher unter dem Wert der Schwellenwert ($I_{VS}$) liegt, der Abzweigstrom ($I_{BP}$) einen Wert annimmt, der deutlich unterhalb einer Stromstärke liegt, welche dem Leckstrom des Superkondensators entspricht.

5. Verfahren nach einem vorhergehenden Anspruch, bei dem die Kennlinie des Abzweigstroms in Abhängigkeit der Spannung an den Anschlüssen des Superkondensators ein hystereseförmiges Signal ist.

6. Verfahren nach einem der vorhergehenden Ansprüche, umfassend einen Schritt des Filterns hochfrequenter Oberwellen der Spannung (V) an den Anschlüssen des Superkondensators.

7. Verfahren nach einem der vorhergehenden Ansprüche, umfassend einen Schritt der erneuten Initialisierung des Laders (15) in Abhängigkeit der Spannung (V) an den Anschlüssen des Superkondensators mit Hilfe einer logischen Spannungsdetektortunktion, bezeichnet als Neuinitialisierungsfunktion ($F_1$), welche in der Lage ist, von einem aktivierten Zustand in einen deaktivierten Zustand überzugehen, wenn die Spannung (V) an den Anschlüssen des Superkondensators eine dritte vordefinierte Spannung übersteigt, die niedriger oder gleich der ersten vordefinierten Spannung ($V_{OH}$) ist, um anschließend in den aktivierten Zustand zurückzukehren, wenn die Spannung (V) an den Anschlüssen des Superkondensators unter eine vierte vordefinierte Spannung fällt, die niedriger ist als die zweite vordefinierte Spannung ($V_{OB}$).

8. Verfahren nach einem der vorhergehenden Ansprüche, umfassend einen Schritt des Detektierens einer kleinsten Sicherheitsspannung an den Anschlüssen des Superkondensators mit Hilfe einer logischen Spannungsdetektorfunktion, bezeichnet als Minimalspannungs-Detektorfunktion und dazu geeignet, von einem aktivierten Zustand überzugehen in einen deaktivierten Zustand, wenn die Spannung an den Anschlüssen des Superkondensators eine fünfte vordefinierte Spannung übersteigt, um anschließend in den aktivierten Zustand zurückzukehren, wenn die Spannung an den Anschlüssen des Superkondensators unter eine sechste vordefinierte Spannung gelangt.

9. Verfahren nach einem der vorhergehenden Ansprüche, umfassend einen Schritt des Ladens einer Mehrzahl von Superkondensatoren ($11_I$), wobei die Optimierungsfunktion ($F_0$) aus einem aktivierten Zustand in einen deaktivierten Zustand gelangt, wenn mindestens eine der Spannungen ($V_i$) an den Anschlüssen der Superkondensatoren die erste vordefinierte Spannung ($V_{OH}$) übersteigt, um in einen aktivierten Zustand zurückzukehren, wenn jede der Spannungen ($V_I$) an den Anschlüssen der Superkondensatoren unter die zweite vordefinierte Spannung ($V_{OB}$) abfällt.

10. Verfahren nach Anspruch 7, bei dem die Neuinitialisierungsfunktion ($F_1$) aus dem aktivierten Zustand in einen deaktivierten Zustand gelangt, wenn mindestens eine der Spannungen an den Anschlüssen der Superkondensatoren die dritte vordefinierte Spannung übersteigt, um in den aktivierten Zustand zurückzukehren, wenn jede der Spannungen ($V_i$) an den Anschlüssen der Superkondensatoren unter den vierten vordefinierten Spannungswert fällt.

11. Verfahren nach Anspruch 9 oder 10, bei dem die Minimalspannungs-Detektorfunktion von einem aktivierten Zustand in einen deaktivierten Zustand übergeht, wenn jede der Spannungen ($V_i$) an den Anschlüssen der Superkondensatoren die fünfte vordefinierte Spannung übersteigt, um in den aktivierten Zustand zurückzukehren, wenn mindestens eine der Spannungen ($V_i$) an den Anschlüssen der Superkondensatoren unter die sechste vordefinierte Spannung abfällt.

12. Verfahren nach einem der Ansprüche 9 bis 11, umfassend einen Schritt des Detektierens der Streuung der Spannung an den Anschlüssen der Superkondensatoren mittels einer logischen Spannungsdetektorfunktion, bezeichnet als Streuungsdetektorfunktion, wobei die Streuungsdetektorfunktion aus einem aktivierten Zustand in einen deaktivierten Zustand übergeht, wenn jede der Spannungen ($V_I$) an den Anschlüssen der Superkondensatoren eine siebte vordefinierte Spannung übersteigt, um in den aktivierten Zustand zurückzukehren, wenn mindestens eine der Spannungen an den Anschlüssen der Superkondensatoren unter eine achte vordefinierte Spannung abfällt.

13. System (10, 20) zum Ausführen des Verfahrens nach einem der vorhergehenden Ansprüche, umfassend:

mindestens einen Superkondensator (11, $11_i$),

eine Abzweigschaltung (12, $12_i$) mit einem als schaltendes Element arbeitenden Transistor, der zu den Anschlüssen des Superkondensators parallelgeschaltet ist,

eine Ladeeinrichtung (15),

eine Detektoreinheit (14), die mindestens ein logisches Signal liefert, welches repräsentativ ist für die Spannung an den Anschlüssen des Superkondensators, wobei das logische Signal an die Ladeeinrichtung geliefert wird.

14. System (10, 20) nach dem vorhergehenden Anspruch, umfassend ein Tiefpaßfilter (13, $13_i$), welches zu den Anschlüssen des Superkondensators parallelgeschaltet ist.

15. System (10, 20) nach einem der Ansprüche 13 oder 14, umfassend mehrere Superkondensatoren ($11_i$), welche in Serie geschaltet sind, wobei die Abzweigschaltung ($12_I$) parallel zu den Anschlüssen von jedem der Superkondensatoren geschaltet ist.

16. System nach einem der Ansprüche 13 oder 14, umfassend eine Mehrzahl von in Serie geschalteten Superkondensatoren und eine einzige Abzweigschaltung, die parallel zu den Anschlüssen der Gruppe von Superkondensatoren geschaltet ist.

17. Verfahren nach einem der Ansprüche 13 oder 14, umfassend eine Mehrzahl von parallelgeschalteten Superkondensatoren, und eine einzige Abzweigschaltung, die parallel zu den Anschlüssen der Gruppe von Superkondensatoren geschaltet ist.

## Claims

1. A method of charging at least one supercapacitor (11) including a step (22) of bypassing the current flowing in said supercapacitor so that, when the voltage (V) at the terminals of said supercapacitor reaches a predetermined value, constituting a threshold voltage ($V_S$), the bypass current ($I_{BP}$) assumes a maximum value constituting a nominal bypass current, which method is **characterized in that** it includes a step (21) of monitoring of the charging current ($I_C$) of said supercapacitor as a function of the voltage (V) at the terminals of said supercapacitor by a voltage detector logic function ($F_0$), constituting an optimization function, able to change from an activated state to a deactivated state when the voltage (V) at the terminals of said supercapacitor exceeds a first predefined voltage ($V_{OH}$) greater than the threshold voltage ($V_S$) and then to return to the activated state when said voltage (V) at the terminals of said supercapacitor falls below a second predefined voltage ($V_{OB}$) less than or equal to said first predefined voltage ($V_{OH}$).

2. A charging method according to claim 1, wherein said signal delivered by said optimization function ($F_0$) is a hysteresis signal.

3. A charging method according to either claim 1 or claim 2, including a step of charging said supercapacitor with a charging current ($I_C$) greater than said nominal bypass current and maintaining said charging step for as long as said optimization logic function ($F_0$) is in the activated state.

4. A charging method according to any preceding claim, including a step such that, when the voltage (V) at the terminals of said supercapacitor returns to a voltage value, constituting a reference voltage ($V_R$), which is less than the value of said threshold voltage ($V_S$), the bypass current ($I_{BP}$) assumes a value very much less than a current corresponding to the leakage current of said supercapacitor.

5. A charging method according to the preceding claim, wherein the characteristic of the bypass current as a function of the voltage at the terminals at said supercapacitor is a hysteresis signal.

6. A charging method according to any preceding claim, including a step of filtering high-frequency harmonics of said voltage (V) at the terminals of said supercapacitor.

7. A charging method according to any preceding claim, including a step of reinitializing of the charger (15) as a function of the voltage (V) at the terminals of the supercapacitor by a voltage detector logic function, constituting a reinitialization function ($F_1$), able to change from an activated state to a deactivated state when the voltage (V) at the terminals of said supercapacitor exceeds a third predefined voltage less than or equal to said first predefined voltage ($V_{OH}$) and then to return to said activated state when said voltage (V) at the terminals of said supercapacitor falls below a fourth predefined voltage less than said second predefined voltage ($V_{OB}$).

8. A charging method according to any preceding claim, including a step of detection of a minimum safety voltage at the terminals of the supercapacitor by a voltage detector logic function, constituting a minimum voltage detector function, able to change from an activated state to a deactivated state when the voltage at the terminals of said supercapacitor exceeds a fifth predefined voltage and to return to the activated state when said voltage at the terminals of said supercapacitor falls below a sixth predefined voltage.

9. A charging method according to any preceding claim, including a step of charging a plurality of supercapacitors ($11_i$), wherein said optimization function ($F_0$) changes from an activated state to a deactivated state when at least one of the voltages ($V_i$) at the terminals of said supercapacitors exceeds said first predefined voltage ($V_{OH}$) and returns to the activated state when each of the voltages ($V_i$) at the terminals of said supercapacitors falls below said second predefined voltage ($V_{OB}$).

10. A charging method according to claim 7, wherein said reinitialization function ($F_1$) changes from an activated state to a deactivated state when at least one of the voltages ($V_i$) at the terminals of said supercapacitors exceeds said third predefined voltage and returns to the activated state when each of the voltages ($V_i$) at the terminals of said supercapacitors falls below said fourth predefined voltage.

11. A charging method according to either claim 9 or claim 10, wherein said minimum voltage detector function changes from an activated state to a deactivated state when each of the voltages ($V_i$) at the terminals of said supercapacitors exceeds said fifth predefined voltage and returns to the activated state when at least one of the voltages ($V_i$) at the terminals of said supercapacitors falls below said sixth predefined voltage.

12. A charging method according to any of claims 9 to 11, including a step of detection of dispersion of the voltage at the terminals of said supercapacitors by a voltage detector logic function, constituting a dispersion detector function, wherein said dispersion detector function changes from an activated state to a deactivated state when each of the voltages ($V_i$) at the terminals of said supercapacitors exceeds a seventh predefined voltage and returns to the activated state when at least one of the voltages at the terminals of said supercapacitors falls below an eighth predefined voltage.

13. A system (10, 20) for implementing the method according to any preceding claim, which system comprises:

   - at least one supercapacitor (11, $11_i$),
   - a bypass circuit (12, $12_i$) comprising a transistor operating in switching mode and connected in parallel with the terminals of said supercapacitor,
   - charging means (15), and
   - a detector unit (14) delivering at least one logic signal representing the voltage at the terminals of said supercapacitor, said logic signal being supplied to said charging means.

14. A system (10, 20) according to the preceding claim, comprising a low-pass filter (13, $13_i$) connected in parallel with the terminals of said supercapacitor.

15. A system (10, 20) according to either claim 13 or claim 14, including a plurality of supercapacitors ($11_i$) connected in series, a bypass circuit ($12_i$) being connected in parallel to the terminals of each of said supercapacitors.

16. A system according to either claim 13 or claim 14, including a plurality of supercapacitors connected in series, a single bypass circuit being connected in parallel to the terminals of all of said supercapacitors.

17. A system according to either claim 13 or claim 14, including a plurality of supercapacitors connected in parallel, a single bypass circuit being connected in parallel to the terminals of all of said supercapacitors.

$I_C$ $\underline{10}$ $I_{BP}$

15

11

13 V 12

V

14

$F_0$

$F_1$

**Fig.1**

**Fig.2**

**Fig.3**

Fig.4